# EUROPEAN PATENT APPLICATION

(11) **EP 3 091 195 A1**
(43) Date of publication of application: **09.11.2016**
(21) Application number: 16168058.2
(22) Date of filing: 03.05.2016
(51) Int. Cl.: F01D 11/24, F01K 23/10, F02C 6/18

(54) **SYSTEM AND METHOD FOR WASTE HEAT POWERED ACTIVE CLEARANCE CONTROL**

(30) Priority: 08.05.2015 US 201514707927
(71) Applicant: General Electric Company, Schenectady, NY 12345 (US)
(72) Inventor: BALADI, Mehdi Milani, Cincinnati, OH 45215 (US)
(74) Representative: Lee, Brenda

(57) **Abstract**

A system 10 includes a turbine 32 configured to expand a gas flow. The turbine includes a turbine rotor, such that the heated gas flow rotates the turbine rotor about an axis and a turbine casing 58 is disposed around the turbine rotor. A cooling manifold 76 directs a low pressure cooling fluid toward the turbine casing such that the low pressure cooling fluid cools the turbine casing 58 and controls the clearance between the turbine rotor and the turbine casing. Corresponding method for controling the clearance between the turbine rotor and the turbine casing.

## Description

### BACKGROUND

The subject matter disclosed herein relates to gas turbine engines, such as a system and method for waste heat powered active clearance control.

Gas turbine systems generally include a compressor, a combustor, and a turbine. The combustor combusts a mixture of compressed air and fuel to produce hot combustion gases directed to the turbine to produce work, such as to drive an electrical generator. The compressor compresses air from an air intake, and subsequently directs the compressed air to the combustor.

Most active clearance control units utilize pressurized bleed air from the compressor section of the gas turbine for clearance control of turbine blades. However, the energy to pressurize the bleed air in the compressor section of the gas turbine is lost from the thermodynamic cycle.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a turbine configured to expand a gas flow and a cooling manifold. The turbine includes a turbine rotor and a turbine casing. The expanding gas flow is configured to rotate the turbine rotor about an axis, and the turbine casing is disposed about the turbine rotor. The cooling manifold is configured to direct a low pressure cooling fluid toward the turbine casing. The low pressure cooling fluid is configured to cool the turbine casing.

In a second embodiment, a system includes a turbine configured to expand a gas flow, a steam source configured to generate a steam flow and a cooling manifold. The turbine includes a turbine rotor and a turbine casing. The expanding gas flow is configured to rotate the turbine rotor about an axis, and the turbine casing is disposed about the turbine rotor. The cooling manifold is configured to receive a portion of the steam flow and to direct the portion of the steam flow toward the turbine casing. The portion of the steam flow is configured to cool the turbine casing.

In a third embodiment, a method includes expanding a gas flow within a turbine casing, such that the gas flow drives a turbine rotor. The method also includes controlling a clearance between the turbine rotor and the turbine casing. Controlling the clearance includes directing a first steam flow to the turbine casing and cooling the turbine casing to a desired temperature.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a gas turbine system and an active clearance control circuit;
FIG. 2 is a block diagram of an embodiment of the gas turbine system and the active clearance control circuit;
FIG. 3. is a cross-sectional view of an embodiment of a turbine section and a cooling manifold of the active clearance control circuit; and
FIG. 4 is a flow chart illustrating an embodiment of a method for actively controlling the clearance of a gas turbine casing relative to the moving parts contained in the gas turbine casing.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

A system and a method for actively controlling clearance of a gas turbine as described herein includes a gas turbine configured to expand a gas flow and a cooling manifold configured to direct a cooling fluid toward a turbine casing. In some embodiments, the gas turbine utilized in the system and the method for active clearance control may include an aero-derivative gas turbine engine. Cooling a portion of the turbine casing with the cooling fluid may help protect the internal components housed in the turbine casing from impact with an interior surface of the turbine casing by controlling the thermal expansion and thermal contraction of the portion of the turbine casing. However, cooling the turbine casing with high pressure bleed air from the compressor section of the gas turbine section for clearance control can decrease the efficiency of the gas turbine because work is not extracted from the high pressure bleed air in the turbine section of the gas turbine, yet work is expended to pressurize the bleed air in the compressor section. In some embodiments, the cooling fluid (e.g., steam) may be an outflow (e.g., low pressure flow relative to high pressure bleed air) from a downstream system (e.g., steam turbine) that otherwise may be vented or released to an external environment or reservoir. The cooling fluid may cool the turbine casing via convection and/or impingement. As discussed herein, the term "cooling fluid" may be defined as a fluid (e.g., air, carbon dioxide, steam, low grade steam, low grade waste steam) having a pressure greater than an ambient pressure of the external environment. While some embodiments of the cooling fluid discussed below utilize steam, the cooling fluid is not intended to be restricted to steam. Additionally, the system and methods described herein may be utilized for active clearance control of other equipment such as a compressor.

In some embodiments, steam may be heated or generated by the gas (e.g., exhaust) flow downstream of a rotor from which a plurality of turbine blades and/or other equipment extends. For example, the gas flow of the turbine may be directed to a heat recovery steam generator (HRSG) which can generate a steam flow. The steam flow may be used to drive a steam turbine for utilization in a combined cycle power plant or another suitable process. The steam flow directed through the steam turbine can be used to power the load of a power plant, for use in another operation, or it can be vented to atmosphere. As discussed herein, a portion of the steam flow exiting the steam turbine can be low pressure steam (e.g., low grade steam, low grade waste steam), which is directed to the cooling manifold to cool the exterior surface of the turbine casing. The term "low pressure steam" may be defined as steam (e.g., low grade steam, low grade waste steam) having a lower pressure than the steam that exits the HRSG, yet has a pressure greater than an ambient pressure of the external environment. The steam flow directed through the steam turbine can be expanded to reduce the pressure of the low pressure steam to be suitable to maintain the desired clearance control. The pressure of the low pressure steam can be between about 0.001 to 50 psig, about .01 to 40 psig, about 0.1 to 30 psig, about 1 to 20 psig (about 0.007 to 345 kpa, about 0.067 to 276 kpa, about 0.689 kpa to 207 kpa, about 6.895 kpa to 138 kpa). The cooling manifold can be coupled to the HRSG, the steam turbine, or another source of steam to receive the portion of the low pressure steam as the cooling fluid. The cooling manifold can be configured to direct the low pressure steam to the gas turbine casing through a plurality of apertures or openings disposed in the cooling manifold. Controlling the flow of the low pressure steam can provide for increased clearance control between the plurality of stationary and rotating components. The various apertures or openings of the cooling manifold can be utilized all at once, or one or more at a time to control the clearance for sections of the casing. Besides the turbine exhaust, the cooling fluid could be pressurized by any other source of waste heat available. As may be appreciated, the terms "low grade steam" or "low grade waste steam" indicate steam flows having pressure greater than the ambient environment, yet are not otherwise used for meaningful work (e.g., to drive a steam turbine). For example, a "low grade steam" or "low grade waste steam" flow may be a flow from a downstream system (e.g., steam turbine, heat exchanger) that has extracted work from the flow.

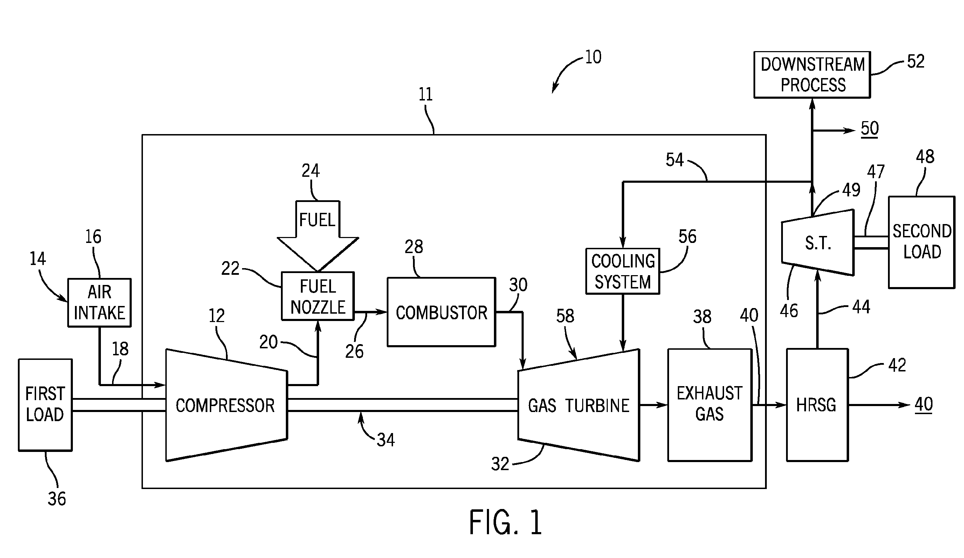

Turning now to the drawings, FIG. 1 illustrates a block diagram of an embodiment of a gas turbine system 10 receiving a low pressure steam generated by a heat recovery steam generator (HRSG) 42. The gas turbine system 10 may be open to the atmosphere or may be housed in an enclosure 11, such as an acoustic enclosure. A compressor 12 intakes ambient air 14 to the gas turbine system 10 via an air intake 16. The ambient air 14 is taken in by the air intake 16 into the gas turbine system 10 via a suitable mechanism, such as a cold air intake, for subsequent entry of an inlet air 18 into the compressor 12. The compressor 12 compresses inlet air 18, forming pressurized air 20 by rotating blades within the compressor 12. When the compressor 12 compresses the inlet air 18, the compressor 12 adds energy to the inlet air 18 thereby increasing the pressure and the temperature such that the pressurized air 20 is warmer and at a higher pressure than the ambient air 14. The pressurized air 20 may be discharged into one or more fuel nozzles 16, which mix the pressurized air 20 and a fuel 24 (e.g., a liquid fuel and/or gas fuel, such as natural gas) to produce an air-fuel mixture 26 suitable for combustion.

As depicted, the pressurized air 20 enters a fuel nozzle 22 and mixes with fuel 24. The fuel nozzle 22 directs the air-fuel mixture 26 into a combustor 28. The combustor 28 ignites and combusts the air-fuel mixture 26, to form combustion products 30. The combustion products 30 are directed to a gas turbine 32, where the combustion products 30 expand and drive blades of the gas turbine 32 about a shaft 34.

The gas turbine 32 is connected to the compressor 12 by the common shaft 34 to drive a first load 36. Compressor vanes or blades are included as components of a compressor 12. Blades within the compressor 12 are coupled to a shaft 34, which is driven by the gas turbine 32. The shaft 34 is coupled to several components (e.g., compressor 12, gas turbine 32, first load 36) throughout the gas turbine system 10. As will be appreciated, the first load 36 may include an electrical generator, a compressor, a propeller of an airplane, and so forth. Eventually, the combustion products 30 exit the gas turbine 32 as exhaust gases 38, which then exit the gas turbine system 10 via an exhaust outlet 40.

In some embodiments, the exhaust gases 38 enter the HRSG 42 via the exhaust outlet 40. The HRSG 42 recovers heat from the exhaust gases 38 to generate pressurized steam 44. As may be appreciated, the volumetric expansion of water when it changes phase from liquid to gas enables the generated steam to be pressurized. The steam 44 can be utilized in a cogeneration process or other suitable process or in a steam turbine 46. As will be appreciated, the steam turbine 46 may be connected by a second shaft 47 to drive a second load 48. The second load 48 may include an electrical generator, a pump, other shaft driven equipment, and so forth. In some embodiments, the second load 48 is the same load as the first load 36. Some of the steam 44 entering the steam turbine can be vented to atmosphere 50 or utilized in a downstream process 52. As discussed herein, low pressure steam 54 from the downstream process 52 can be directed to a cooling system 56 to aid in active clearance control of the rotor 92 from the gas turbine 32. The low pressure steam 54 can be impinged (e.g., at high velocity) onto targeted locations on a gas turbine casing 58 to increase local convective coefficients and to increase heat transfer from the gas turbine casing 58. The turbine casing 58 will thermally expand or contract based on the temperature of the turbine casing 58, thereby affecting the clearance between rotating and stationary components housed in the gas turbine 32. The low pressure steam 54 applied to the turbine casing 58 affects the temperature of the turbine casing 58. As may be appreciated, aero-derivative gas turbine systems 10 may have thinner turbine casings 58 than industrial gas turbine systems 10. Accordingly, cooling the outer surface of the turbine casing of an aero-derivative gas turbine system may affect the clearance more quickly than cooling the outer surface of the turbine casing of an industrial gas turbine system.

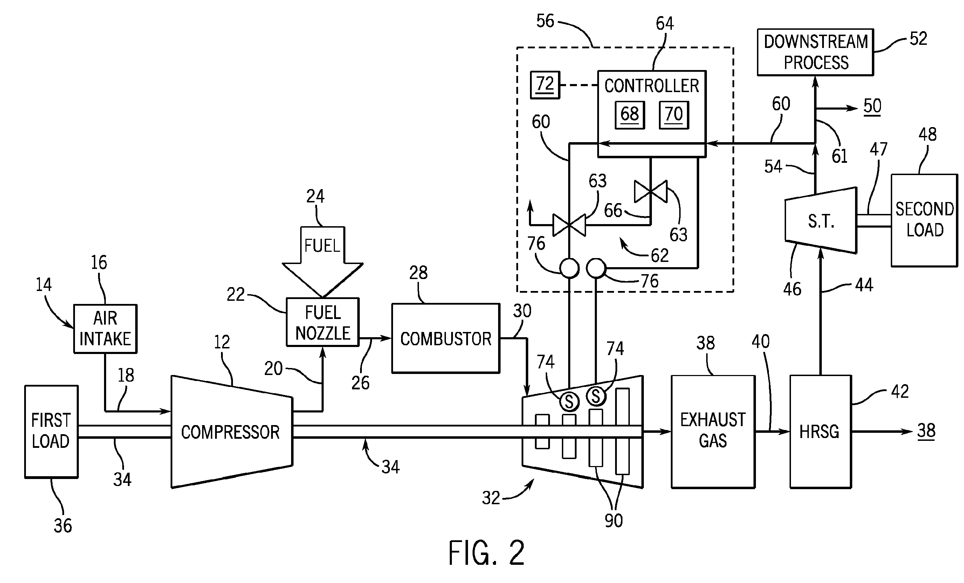

FIG. 2 illustrates a block diagram of an embodiment of the gas turbine system 10 and the active clearance control circuit. As described above, ambient air 14 is fed to the air intake 16 to send inlet air 18 to the compressor 12. The compressor 12 utilizes its internal components, including compressor blades and vanes, to pressurize the inlet air 18 to form pressurized air 20. Fuel 24 and pressurized air 20 are combined to create an air-fuel mixture 26. The air-mixture 26 is sent to the combustor 18. The combustor 18 ignites and combusts the air-fuel mixture 26, creating combustion products 30. The combustion products 30 are sent to the gas turbine 32 for expansion to drive the first load coupled to the shaft 34.

The exhaust gases 38 may enter the HRSG 42 via the exhaust outlet 38. The HRSG 42 recovers heat from the exhaust gases 38 to generate pressurized steam 44. The steam 44 is expanded in the steam turbine 46 as it flows through the steam turbine 46. The steam turbine 46 may be connected by a second shaft 47 to drive a second load 48. The second load 48 may include an electrical generator, a pump, other shaft driven equipment, and so forth. Some of the steam 44 entering the steam turbine 46 can exit through an outlet 49 of the steam turbine 46 as the low pressure steam 54. A portion 60 of the low pressure steam 54 can be directed to a cooling system 56, with a remainder 61 directed to a downstream process 52 or vented to the ambient environment 50, as described above. The portion 60 of the low pressure steam 54 may be utilized to actively control the clearance of the rotor 92 and internal parts (e.g., blades 90) from the gas turbine casing 58. This may occur by directing the portion 60 of the low pressure steam 54 to the turbine casing 58 via a cooling manifold 76.

The cooling manifold 76 is configured to receive the portion 60 of the low pressure steam 54 from the HRSG 42, where the low pressure steam 54 has a pressure less than the steam 44 from the HRSG 42. In some embodiments, the portion 60 of the low pressure steam 54 may include the entire flow of the low pressure steam 54 received from the steam turbine 46 or any non-zero portion of the low pressure steam 54. For example, in some embodiments the portion 60 may include approximately 1/8, 1/4, 1/3, 3/8, 1/2, 5/8, 2/3, 3/4, or 7/8 of the low pressure steam 54.

In some embodiments, the cooling system 56 further expands the portion 60 to reduce the pressure of the low pressure steam 54. For example, in some embodiments the portion 60 of the low pressure steam 54 may be expanded to approximately 0.001 to 50 psig, about 0.01 to 40 psig, about 0.1 to 30 psig, or about 1 to 20 psig (about 0.007 to 345 kpa, about 0.067 to 276 kpa, about 0.689 kpa to 207 kpa, or about 6.895 kpa to 138 kpa). For example, the cooling system 56 may utilize a valve assembly 62 to expand the portion 60 of the low pressure steam 54. Additionally, or in the alternative, the valve assembly 62 can be configured to vent some of the portion 60 to reduce the pressure and/or the flow rate of the low pressure steam 54 directed to the turbine casing 78.

In some embodiments, the valve assembly 62 can include one or more valves 63 of the same or different type. For example, the valve assembly 62 can include one or more gate valves, butterfly valves, globe valves, ball valves, check valves, or other valve types. Moreover, the one or more valve assemblies 62 may include combinations of valves. The valve assembly 62 may be configured to adjust the total volumetric flow to the turbine casing 58 via the cooling manifold 76. Additionally, the valve assembly 62 may be configured to control the distribution of the flow to the cooling manifold 76 via one or more valves 63. The cooling manifold 76 may include multiple openings, which can be disposed around the cooling manifold 76. The openings may be utilized all at once, or as dictated by a sensor 74 for the opening. That is, one or more openings may be controlled to control the distribution of the flow within the cooling manifold 76 to sections of the turbine casing 58.

In one embodiment, the valve assembly 62 can include two valves 63 configured to direct the low pressure steam 54 to two separate cooling manifolds 76. The separate cooling manifolds 76 may utilize separate sensors 74 to provide an output signal corresponding to the conditions at its location. Utilizing separate cooling manifolds 76 for different areas of the turbine casing 58 enables hotter sections of turbine casing 58 to receive a higher volume of the low pressure steam 54 to cool the turbine casing 58 and to control the clearance of the rotor 92, including the blades 90, from an interior surface 82 of the gas turbine 32. As may be appreciated, the higher volume may increase the convective coefficient at the exterior surface 80 of the turbine casing 58, thereby increasing the heat transfer from the turbine casing 58 to the low pressure steam 54.

Each valve 63 of the valve assembly 62 is configured to receive and direct the low pressure steam 54 to the gas turbine 32 for adjusting the clearance of the turbine casing 58 from the internal components (e.g., rotor 92, blades 90) of the gas turbine 32. In some embodiments, the valve assembly 62 can be configured to expand the low pressure steam 54 to reduce the pressure of the low pressure steam 54. As another example of affecting the flow of the low pressure steam 54 (e.g., cooling fluid), the valve assembly 62 may be configured to adjust the flow of the low pressure steam 54 to a desired mass flow, temperature, pressure, or combinations thereof.

Presently contemplated embodiments may include a controller 64 coupled to the cooling system 56. The controller 64 may be coupled to the valve assembly 62 to control the one or more valves 63 via control lines 66. The controller 64 may be configured to open and close the valves to control the flow of the low pressure steam 54 through the valve assembly 62. In certain embodiments, the controller 64 may include a memory 68 to store instructions and a processor 70 configured to the process the instructions. The controller 64 may include an operator interface 72 configured to receive operator input, such as a desired clearance threshold, a desired composition of the cooling fluid, or any combination thereof. In some embodiments, the controller 64 may be configured to control the flow of the low pressure steam 54 as a result of a signal received from one or more sensors 74. The sensors 74 may be configured to measure temperature, clearance distance, pressure, rotational speed, or other operating conditions of the gas turbine system 10. The sensors 74 may be disposed in the gas turbine 32, on the gas turbine casing 58, or any other place suitable for measuring an operating condition as described above. The sensors 74 can include, but are not limited to, thermocouples, motion detectors, proximity sensors, level sensors, pressure sensors, or any other sensors suitable for determining or measuring a clearance between the rotating and stationary components of the gas turbine 32. The rotating components may include, but are not limited, to blades 90, vanes, or rotor 92 of the gas turbine 32. The stationary components of the gas turbine 32 may include, but are not limited, to the casing 58, stators, or vanes of the gas turbine 32.

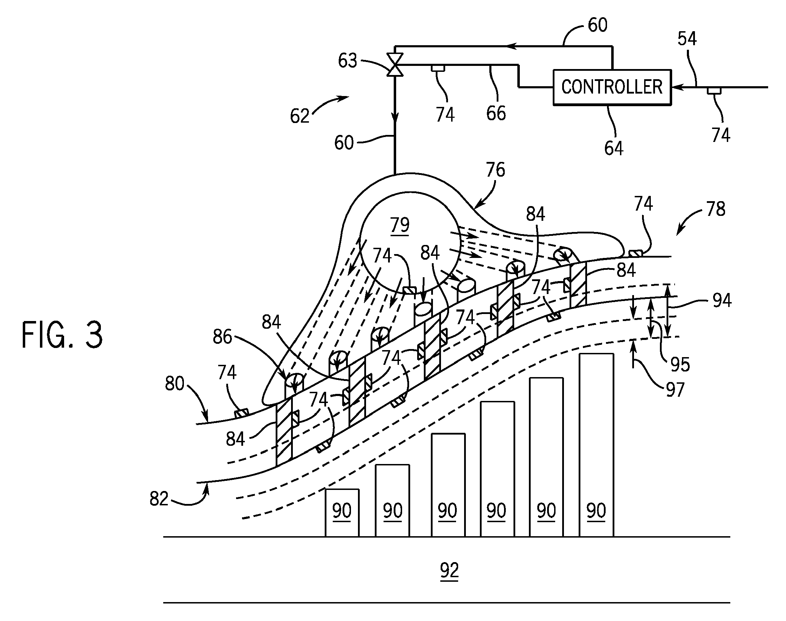

FIG. 3. is a cross-sectional view of an embodiment of a turbine section and a cooling manifold of the active clearance control circuit. As discussed above, the cooling fluid (e.g., low pressure steam 54) is directed to the gas turbine 32 to control the clearance of the internal parts of the gas turbine 32 from a gas turbine casing 78. As discussed herein, the term "cooling fluid" may be defined as a fluid (e.g., air, carbon dioxide, steam, low grade steam, low grade waste steam) having a pressure greater than an ambient pressure of the external environment. Moreover, the term "low pressure cooling fluid" may be defined as a fluid received by the cooling manifold 76 from a system (e.g., steam turbine, heat exchanger) that extracted usable work (e.g., thermal energy, kinetic energy) from the fluid, such that the fluid received by the cooling manifold was previously processed by the system. In some embodiments, the term "cooling fluid" excludes a compressor bleed flow received directly from the compressor. While some embodiments of the cooling fluid discussed below utilize steam, though the cooling fluid is not intended to be restricted to steam. The portion 60 of the cooling fluid (e.g., low pressure steam 54) is directed to the gas turbine casing 78 through cooling passages 79 of the cooling manifold 76. The cooling passages direct the portion 60 of the cooling fluid (e.g., low pressure steam 54) to the cooling manifold 76. The cooling manifold 76 can be attached or otherwise affixed to the gas turbine casing 78.

The gas turbine casing 78 includes an exterior surface 80 and an interior surface 82. Internal casing components 84 (e.g., supports, struts, spacers) may be disposed between the exterior surface 80 and the interior surface 82 of the gas turbine casing 78. The portion 60 of the cooling fluid (e.g., low pressure steam 54) is directed to the exterior surface 80 through a plurality of cooling manifold openings 86. All or one or more of the cooling manifold openings 86 may be utilized at a time to distribute the portion 60 of the cooling fluid to the exterior surface 80. The turbine casing 58 and the turbine blades 90 extending from the rotor 92 in the gas turbine 32 may not warm and expand uniformly. Accordingly, some sections of the turbine casing 58 may utilize a greater quantity of the cooling fluid than other sections to maintain the desired clearance about the rotor 92 and the turbine blades 90. For example, the turbine blades 90 disposed closest to the combustion gases 30 will be exposed to hotter combustion gases 30 that exit the combustor 28 than turbine blades 90 disposed further downstream. The hottest areas of the gas turbine 32 may be most susceptible to reduced clearance between the interior surface 82 and the turbine blades 90, and therefore may utilize a higher flow rate of the cooling fluid. While the cooling fluid may be warmer than the ambient environment about the gas turbine system 10, the cooling fluid is cooler than the exhaust gas flow 38 through the gas turbine 32. Moreover, the specific heat of the cooling fluid (e.g., low pressure steam 54) may be greater than air of the ambient environment or the compressor bleed air. Accordingly, cooling fluid cools the exterior surface 80, thereby causing internal casing component 84 and/or the interior surface 82 of the gas turbine casing 78 to contract. The cooling fluid may directly cool (via impingement) the exterior surface 80, and the cooling fluid may indirectly cool the internal casing components 84 and the interior surface 82. Additionally, the cooling fluid may increase a convective coefficient at the exterior surface 80, thereby increasing the cooling of the exterior surface 80. As may be appreciated, the temperature of the turbine casing 78 (e.g., exterior surface 80, interior surface 82, internal casing components 84) affects a clearance 94 between the rotating parts (e.g., rotor 92, blades 90) housed in the gas turbine casing 78 and the interior surface 82. Accordingly, controlling the temperature of the turbine casing 78 via the cooling fluid enables control of the clearance 94.

When the gas turbine 32 is cold started, the clearance 94 between the interior surface 82 and the rotor 92 and the blades 90 will be greater than when the gas turbine 32 warms up to its normal operating temperature. As the gas turbine 32 reaches normal operating temperatures, the exterior surface 80 and interior surface 82 of the gas turbine casing 78 will begin to thermally contract and/or thermally expand as the combustion products 30 flow through and drive the turbine rotor 92. As such, the clearance 94 will be reduced to an operating clearance 95 as the gas turbine reaches normal operating conditions. As described herein, directing the cooling fluid (e.g., low pressure steam 54) through the cooling manifold openings 86 can control the clearance 94 such that the interior surface 82 and the rotor 92 (including blades 90) maintain a minimum desired separation distance 97. In some embodiments, controller 64 may control the cooling fluid to control the clearance 94 to be between approximately 0.20 mms to 1 mm, about 0.25 mms to 0.762 mms, about 0.38 mms to 0.508 mms (about 8 mils to 40 mils, about 10 mils to 30 mils, about 15 mils to 20 mils).

The controller 64 coupled to the cooling system 56 is configured to receive a signal from the one or more sensors 74. The controller 64 is coupled to the valve assembly 62 to control the one or more valves 63 via control lines 66. The controller 64 may be configured to open and close the valves 63 of the valve assembly 62 to control the flow of the cooling fluid through the cooling manifold openings 86. In certain embodiments, the controller 64 may utilize the memory 68 to store instructions and the processor 70 to process the instructions. In some embodiments, the controller 64 may determine via instructions stored in the memory 68 the desired flow rate of the cooling fluid based at least in part on a temperature of the turbine casing 78 (e.g., exterior surface 80) and the temperature of the cooling fluid. In some embodiments, the controller 64 may determine via instructions stored in the memory 68 the desired pressure of the cooling fluid or the desired clearance 94 between the interior surface 82 and the rotor 92 (including blades 90). In some embodiments, the controller 64 is configured to control the flow of the cooling fluid as a result of a signal received from one or more sensors 74. For example, in early stages of the gas turbine 32, the turbine blades 90 are subject to high pressure combustion products 30. As the combustion products 30 flow through the turbine blades 90, the combustion products 30 are expanded as energy is extracted from this flow at various turbine stages. As the combustion products 30 are expanded to create mechanical energy as they flow through the various stages of the gas turbine 32, the temperature of the turbine casing 58 may decrease in the downstream direction. Thus, the sections of the turbine casing 58 disposed further downstream of the combustor 28 may utilize less cooling fluid to control the clearance between the interior surface 82 and the rotor 92 and the turbine blades 90 than the sections of the turbine casing 58 near the combustor 28.

The sensors 74 are disposed at various points within the gas turbine system 10 to control various control elements. The sensors 74 may be configured to measure a variety of control elements including, but not limited to, the temperature, clearance distance, pressure, rotational speed, or other operating conditions. For example, in one embodiment the sensors 74 may be disposed at various points on the interior surface 82. The sensors 74 disposed on the interior surface 82 may measure proximity of the parts housed in the gas turbine casing 78, such as a plurality of turbine blades 90 disposed on a rotor 92 to the interior surface 82. Additionally, or in the alternative, the sensors 74 may be disposed on the exterior surface 80. The sensors 74 may measure the flow rate of the cooling fluid, which may be adjusted by the controller 64 of the cooling system 56 to stay within a specified range of flow. Sensors 74 within the cooling manifold 76 (e.g., within the cooling passages 79) may be configured to measure the temperature of the cooling fluid. In some embodiments, the controller 64 may determine via instructions stored in the memory 68 the desired flow rate of the cooling fluid based at least in part on a temperature of the turbine casing 78 (e.g., exterior surface 80) and the temperature of the cooling fluid. The adaptation of the cooling system 56 results in the controlled clearance 94 between the internal turbine parts and the gas turbine casing 78.

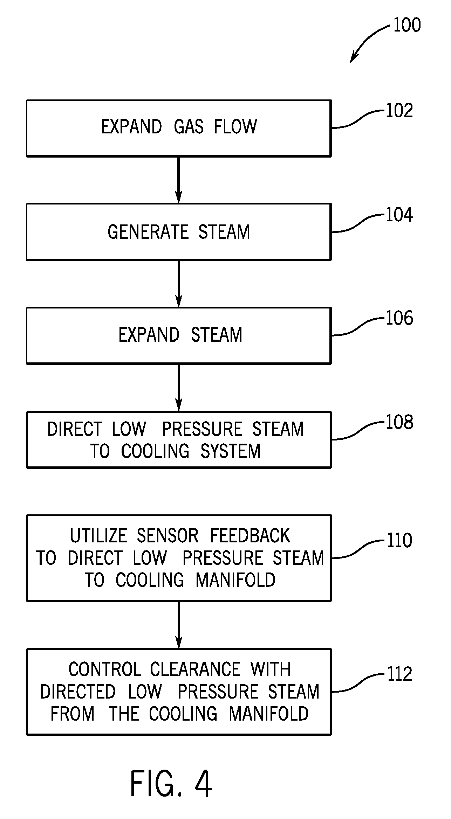

FIG. 4 is a process flow diagram illustrating an embodiment of a method 100 for actively controlling the clearance of the gas turbine casing relative to the moving parts (e.g., rotor, blades) contained within the gas turbine casing. The gas turbine expands (block 102) a gas flow (e.g., exhaust gas) through the rotor and a plurality of turbine blades. The gas flow downstream of the plurality of turbine blades is directed to an HRSG, which generates (block 104) a steam flow. In some embodiments, a steam turbine expands (block 106) the steam flow to drive a second load coupled to the steam turbine. Additionally, or in the alternative, the steam flow is directed to a downstream system that utilizes the steam flow, such as for preheating a component and/or a flow of the gas turbine system. As may be appreciated, the steam turbine and/or the downstream system reduces the energy of the steam flow via reducing the pressure and/or the temperature of the steam flow. The cooling system directs (block 108) a portion of the steam flow (e.g., low pressure steam) to the cooling system. The controller of the cooling system may utilize (block 110) sensor feedback to distribute the portion of the steam flow to one or more cooling manifolds. The controller may control valves of a valve assembly to control the distribution of the portion of the low pressure steam flow to the one or more cooling manifolds. The one or more cooling manifolds direct the low pressure steam flow toward the turbine casing to control (block 112) the clearance between the rotor and the turbine blades and the turbine casing. While the above discussion utilizes low pressure steam as the cooling fluid, it may be appreciated that any cooling fluid (e.g., air, carbon dioxide, steam, low grade steam, low grade waste steam) having a pressure greater than an ambient pressure of the external environment may be utilized in presently contemplated embodiments.

Technical effects of the invention include directing a cooling fluid (e.g., low pressure steam, low grade steam, low grade waste steam) through a plurality of cooling manifold openings toward a gas turbine casing to cool the gas turbine casing. The plurality of cooling manifold openings are configured to control the clearance between the rotor and the interior surface of the gas turbine.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system comprising:
   a turbine configured to expand a gas flow, the turbine comprising:
      a turbine rotor, wherein the expanding gas flow is configured to rotate the turbine rotor about an axis; and
      a turbine casing disposed about the turbine rotor; and
   a cooling manifold configured to direct a low pressure cooling fluid toward the turbine casing, wherein the low pressure cooling fluid is configured to cool the turbine casing.
2. The system of clause 1, wherein the turbine comprises an aero-derivative gas turbine.
3. The system of any preceding clause, comprising a controller configured to control the flow of the low pressure cooling fluid toward the turbine casing based at least in part on a clearance between rotating components and stationary components of the turbine.
4. The system of any preceding clause, wherein the controller is configured to control the flow of the low pressure cooling fluid to maintain the clearance to be greater than approximately 0.254 mms (10 mils).
5. The system of any preceding clause, wherein the low pressure cooling fluid comprises a steam flow heated by the gas flow downstream of the turbine rotor.
6. The system of any preceding clause, comprising a heat recovery steam generator (HRSG) configured to receive the gas flow and to generate a steam flow, wherein the low pressure cooling fluid comprises the steam flow, and the cooling manifold is coupled to the HRSG.
7. The system of any preceding clause, comprising a compressor coupled to the turbine, wherein the turbine is configured to drive the compressor.
8. The system of any preceding clause, wherein the cooling manifold is configured to direct the low pressure cooling fluid to an exterior surface of the turbine casing.
9. A system comprising:
   a turbine configured to expand a gas flow, the turbine comprising:
      a turbine rotor, wherein the expanding gas flow is configured to rotate the turbine rotor about an axis; and
      a turbine casing disposed about the turbine rotor;
   a steam source configured to generate a steam flow; and
   a cooling manifold configured to receive a portion of the steam flow and to direct the portion of the steam flow toward the turbine casing, wherein the portion of the steam flow is configured to cool the turbine casing.
10. The system of any preceding clause, comprising a controller configured to control the flow of the portion of the steam flow toward the turbine casing based at least in part on a clearance between the turbine rotor and the turbine casing.
11. The system of any preceding clause, wherein the controller is configured to control the flow of the portion of the steam flow to maintain the clearance to be greater than approximately 0.254 mms (10 mils).
12. The system of any preceding clause, wherein the steam flow is heated by the gas flow downstream of the turbine rotor.
13. The system of any preceding clause, comprising a steam turbine coupled to the steam source and to the cooling manifold, wherein the steam source comprises a heat recovery steam generator (HRSG) configured to receive the gas flow and to generate the steam flow, the steam turbine is configured to receive the steam flow from the HRSG, the steam flow is configured to drive the steam turbine, and an outlet of the steam turbine is configured to direct the portion of the steam flow to the cooling manifold.
14. The system of any preceding clause, wherein the cooling manifold is configured to direct the portion of the steam flow to an exterior surface of the turbine casing.
15. A method comprising:
   expanding a gas flow within a turbine casing, wherein the gas flow drives a turbine rotor; and
   controlling a first clearance between the turbine rotor and the turbine casing, wherein controlling the first clearance comprises:
      directing a first steam flow to the turbine casing; and
      cooling the turbine casing to a first desired temperature.
16. The method of any preceding clause, comprising generating the first steam flow, wherein the gas flow downstream of the turbine rotor heats the first steam flow prior to directing the first steam flow to the turbine casing.
17. The method of any preceding clause, comprising expanding a second steam flow via a steam turbine, wherein at least a portion of the second steam flow downstream of the steam turbine is directed to the turbine casing as the first steam flow.
18. The method of any preceding clause, comprising controlling a second clearance between a compressor rotor and a compressor casing, wherein controlling the second clearance comprises:
   directing a second steam flow to the compressor casing; and
   cooling the compressor casing to a second desired temperature.
19. The method of any preceding clause, wherein the first steam flow is less than approximately 138 kPa (20 psi).
20. The method of any preceding clause, wherein directing the first steam flow to the turbine casing comprises directing the first steam flow to an exterior surface of the turbine casing.

## Claims

1. A system comprising:
a turbine configured to expand a gas flow, the turbine comprising:
a turbine rotor, wherein the expanding gas flow is configured to rotate the turbine rotor about an axis; and
a turbine casing disposed about the turbine rotor; and
a cooling manifold configured to direct a low pressure cooling fluid toward the turbine casing, wherein the low pressure cooling fluid is configured to cool the turbine casing.

2. The system of claim 1, wherein the turbine comprises an aero-derivative gas turbine.

3. The system of claim 1 or 2, comprising a controller configured to control the flow of the low pressure cooling fluid toward the turbine casing based at least in part on a clearance between rotating components and stationary components of the turbine.

4. The system of claim 1, 2 or 3, wherein the low pressure cooling fluid comprises a steam flow heated by the gas flow downstream of the turbine rotor.

5. The system of any of claims 1 to 4, comprising a heat recovery steam generator (HRSG) configured to receive the gas flow and to generate a steam flow, wherein the low pressure cooling fluid comprises the steam flow, and the cooling manifold is coupled to the HRSG.

6. A system comprising:
a turbine configured to expand a gas flow, the turbine comprising:
a turbine rotor, wherein the expanding gas flow is configured to rotate the turbine rotor about an axis; and
a turbine casing disposed about the turbine rotor;
a steam source configured to generate a steam flow; and
a cooling manifold configured to receive a portion of the steam flow and to direct the portion of the steam flow toward the turbine casing, wherein the portion of the steam flow is configured to cool the turbine casing.

7. The system of claim 6, comprising a controller configured to control the flow of the portion of the steam flow toward the turbine casing based at least in part on a clearance between the turbine rotor and the turbine casing.

8. The system of claim 6 or 7, wherein the controller is configured to control the flow of the portion of the steam flow to maintain the clearance to be greater than approximately 0.254 mms (10 mils).

9. The system of claim 6, 7 or 8, wherein the steam flow is heated by the gas flow downstream of the turbine rotor.

10. The system of any of claims 6 to 9, comprising a steam turbine coupled to the steam source and to the cooling manifold, wherein the steam source comprises a heat recovery steam generator (HRSG) configured to receive the gas flow and to generate the steam flow, the steam turbine is configured to receive the steam flow from the HRSG, the steam flow is configured to drive the steam turbine, and an outlet of the steam turbine is configured to direct the portion of the steam flow to the cooling manifold.

11. A method comprising:
expanding a gas flow within a turbine casing, wherein the gas flow drives a turbine rotor; and
controlling a first clearance between the turbine rotor and the turbine casing, wherein controlling the first clearance comprises:
directing a first steam flow to the turbine casing; and
cooling the turbine casing to a first desired temperature.

12. The method of claim 11, comprising generating the first steam flow, wherein the gas flow downstream of the turbine rotor heats the first steam flow prior to directing the first steam flow to the turbine casing.

13. The method of claim 11 or 12, comprising expanding a second steam flow via a steam turbine, wherein at least a portion of the second steam flow downstream of the steam turbine is directed to the turbine casing as the first steam flow.

14. The method of claim 11, 12 or 13, comprising controlling a second clearance between a compressor rotor and a compressor casing, wherein controlling the second clearance comprises:
directing a second steam flow to the compressor casing; and
cooling the compressor casing to a second desired temperature.

15. The method of any of claims 11 to 14, wherein the first steam flow is less than approximately 138 kPa (20 psi).
